# EUROPEAN PATENT APPLICATION

(11) **EP 4 556 353 A1**
(43) Date of publication of application: **21.05.2025**
(21) Application number: 23209811.1
(22) Date of filing: 14.11.2023
(51) Int. Cl.: B62D 33/07

(54) **SAFETY RETAINER FOR A CABIN OF A VEHICLE, VEHICLE COMPRISING SUCH A SAFETY RETAINER AND METHOD FOR PERFORMING MAINTENANCE OF SUCH A VEHICLE**

(71) Applicant: Volvo Truck Corporation, 405 08 Göteborg (SE)
(72) Inventor: GIBOUDEAU, Julien, 69580 SATHONAY VILLAGE (FR)
(74) Representative: Lavoix

(57) **Abstract**

A safety retainer (20), for a cabin (5) of a vehicle (1), the safety retainer (20) comprising a sliding interface (22), configured to be rigidly mounted on the cabin (5) of the vehicle (1), the sliding interface (22) comprising a slit (32) and a lock (34), located at a locking end (36) of the slit (32), a retainer bar (26), comprising a first end configured to be pivotably secured to a chassis (3) of the vehicle (1) and a second end comprising a sliding member (44). The retainer bar (26) is configured to move between an inoperative position, wherein the sliding member is inserted in the slit (32) and configured to slide along the slit (32); and an operative position, wherein the sliding member (44) is engaged with the lock (34) to prevent a relative movement of the retainer bar (26) and the sliding interface.

## Description

### TECHNICAL FIELD

The disclosure relates generally to vehicles, in particular terrestrial vehicles. In particular aspects, the disclosure relates to a safety retainer for a cabin of a vehicle, a vehicle comprising such a safety retainer and a method for performing maintenance of such a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

To perform maintenance operations such as repairs, checks and or inspections of vehicles such as heavy-duty vehicles, it can be necessary to access elements or machinery located below a cabin of the vehicle. This is typically the case for vehicles such as trucks, where the motor may be located below the cabin. In this case, it is necessary to pivot the cabin from an initial position to a tilted position, to make the motor and/or other elements of the truck accessible. However, there is a risk of the cabin pivoting back into its initial position, which may cause injury to a user or material damage to the vehicle. Current systems to prevent the cabin from pivoting back into its initial position include using retaining bars, but they need to be placed in position by the user, who can forget to do so, or do so improperly, increasing the risk of the cabin pivoting back into its initial position. Therefore, an aim of the invention is to solve these problems by disclosing a mechanism that is easy to use and safer than the current existing solutions.

### SUMMARY

According to a first aspect of the disclosure, the invention relates to safety retainer, for a cabin of a vehicle, the safety retainer comprising:
- a sliding interface, configured to be rigidly mounted on the cabin of the vehicle, the sliding interface comprising a slit and a lock, located at a locking end of the slit,
- a retainer bar, comprising a first end configured to be pivotably secured to a chassis of the vehicle and a second end comprising a sliding member; and
the retainer bar being configured to move between:
- an inoperative position, wherein the sliding member is inserted in the slit and configured to slide along the slit; and
- an operative position, wherein the sliding member is engaged with the lock to prevent a relative movement of the retainer bar and the sliding interface.

The first aspect of the disclosure may seek to disclose a safety retainer that is easy to use and safer than existing solutions. A technical benefit may include disclosing a safety retainer that does not need to be manipulated by a user to move between the inoperative position and the operative position. Therefore, there is no risk of the user forgetting to move the retainer bar in the operative position, making the safety retainer safer for the user. This also makes the use of the safety retainer easier, as the user does not need to push or pull or otherwise manipulate the safety retainer to move the bar in the operative position. In addition to this, when the retainer bar is in the inoperative position, the retainer bar is also secured, via the sliding member and the slit, to prevent risk of the retainer bar falling or moving when in the inoperative position.

Optionally in some examples, including in at least one preferred example, the sliding interface further comprises a stand-by area, located at the locking end of the slit. A technical benefit may include having a location on the sliding interface for the sliding member when not in the operative position nor in the inoperative position.

Optionally in some examples, including in at least one preferred example, the retainer bar is further configured to move in a stand-by position and in the stand-by position, the sliding member is in contact with the stand-by area. A technical benefit may include having a position that serves as transition between the operative and inoperative positions, therefore preventing accidental or undesired movement in the operative or in the inoperative positions.

Optionally in some examples, including in at least one preferred example, further comprising a switch bracket, pivotably secured to the sliding interface and located between the stand-by area and the lock. A technical benefit may include facilitating and/or preventing movement of the retainer bar from the operative to the stand-by position and/or from the standby position to the operative position.

Optionally in some examples, including in at least one preferred example, the switch bracket is pivotable between:
- a straight position wherein the sliding member is configured to slide on the switch bracket for the retainer bar to move from the operative position to the stand-by position; and
- a blocking position, wherein the switch bracket is in contact with the sliding member and blocks the sliding member to prevent the retainer bar from moving from the stand-by position to the operative position.

A technical benefit may include facilitating movement of the retainer bar from the operative to the stand-by position by the straight position, and preventing the retainer bar from moving from the stand-by position to the operative position by the blocking position. This therefore increases the safety and the ease of use of the safety mechanism, as there is no risk of undesired movement of the retainer bar from the stand-by position in the operative position.

Optionally in some examples, including in at least one preferred example, the safety retainer further comprises a torsion spring biasing the switch bracket in the blocking position. A technical benefit may include increasing the safety of the safety retainer, as, by default, the switch bracket is in the position that prevents the retainer bar from moving from the stand-by position to the operative position by the blocking position.

Optionally in some examples, including in at least one preferred example, the retainer bar further comprises a handle. A technical benefit may include making the retainer bar easier to manipulate by the user.

According to a second aspect of the disclosure, the invention further relates to a vehicle comprising:
- a chassis;
- a cabin, secured to the chassis, the cabin comprising a rear wall;
- the safety retainer as described above, the retainer bar being pivotably secured to the chassis and the sliding interface being fixedly mounted on the rear wall.

The second aspect of the disclosure may seek to provide a vehicle which is easy to service and safer than existing vehicles. A technical benefit may include having a vehicle comprising a safety retainer that does not need to be manipulated by a user to move between the inoperative position and the operative position. Therefore, there is no risk of the user forgetting to move the retainer bar in the operative position, making the safety retainer safer for the user. This also makes the use of the safety retainer easier, as the user does not need to push or pull or otherwise manipulate the safety retainer to move the bar in the operative position. In addition to this, when the retainer bar is in the inoperative position, the retainer bar is also secured, via the sliding member and the slit, to prevent risk of the retainer bar falling or moving when in the inoperative position.

Optionally in some examples, including in at least one preferred example, the cabin is configured to pivot in an upright position, and when the cabin is in the upright position, the retainer bar is in the inoperative position. A technical benefit may include allowing the retainer bar to move along the slit when the cabin is in the upright position so it can bear vibrations and movements of the vehicle, for example when the vehicle is moving when it is being driven. This also means that the retainer bar is still inserted in the slit, which limits the risk of the retainer bar pivoting and hitting parts of the vehicle.

Optionally in some examples, including in at least one preferred example, the vehicle further comprises a cylinder configured to pivot the cabin from the upright position into a tilted position and, when the cabin is in the tilted position, the retainer bar is in the operative position to lock the cabin in the tilted position. A technical benefit may include preventing the cabin from falling back in the upright position, which means that the cylinder does not have to support the weight of the cabin. This means, that, if the cylinder also supports the weight of the cabin, in case of a failure of the cylinder, the cabin is still locked in the tilted position by the retainer bar. There is therefore no risk of untimely tilting from the tilted position to the upright position which could cause injury to a user or damage to the vehicle.

Optionally in some examples, including in at least one preferred example, the cylinder is further configured to pivot the cabin in a fully tilted position in which a tilt angle of the cabin in the fully tilted position is superior to the tilt angle of the cabin in the tilted position and when the retainer bar is in the standby position, the cabin is in the fully tilted position. A technical benefit may include allowing the movement of the retainer bar from the inoperative to the operative to the inoperative position without having to manually move the retainer bar, and by only pivoting the retainer bar, and allowing the movement of the retainer bar from the operative to the stand-by position in a safe manner. Indeed, in order to move the retainer bar from the operative position, therefore, unlocking the cabin, the cabin needs to be further tilted by the cylinder, which ensures that the cylinder is working and able to support the cabin before the retainer bar unlocks the cabin from the tilted position. This also prevents untimely movement of the retainer bar from the operative position, for example by accidentally moving the retainer bar.

Optionally in some examples, including in at least one preferred example, the tilt angle of the cabin in the fully tilted position is inferior to 90°. A technical benefit may include that the cabin, if not supported, falls back in the upright position. It is therefore not necessary to exert force to pull the cabin from the fully tilted position into the tilted or upright positions, but only to prevent the cabin from tilting in the upright position.

Optionally in some examples, including in at least one preferred example, the cabin is as described above and the handle is configured to be accessible by a user from outside the vehicle. A technical benefit may include increasing safety for the user of the safety retainer, as the user does not have to be in contact with the vehicle other than by touching the handle. The user can therefore manipulate the retainer bar without risking to be crushed or injured by the cabin tilting in the upright position.

According to a third aspect of the disclosure, the invention further relates to a method for performing maintenance on a vehicle, the vehicle comprising:
- a chassis;
- a cabin, secured to the chassis, the cabin comprising a rear wall;
- a safety retainer, the safety retainer comprising:
   ∘ a retainer bar, comprising a first end pivotably secured to the chassis and a second end comprising a sliding member; and
   ∘ a sliding interface, rigidly mounted on the rear wall of the vehicle, the sliding interface comprising a slit and a lock, located at a locking end of the slit,

the retainer bar being configured to move between:
   - an inoperative position, wherein the sliding member is inserted in the slit and configured to move along the slit; and
   - an operative position, wherein the sliding member is engaged with the lock to prevent a relative movement of the retainer bar and the sliding interface.
the method comprising at least:
   a) when the retainer bar is in the inoperative position, tilting the cabin from an upright position into a fully tilted position;
   b) while the cabin is being tilted, sliding the sliding member along the slit until it is partially engaged with the lock;
   c) tilting back the cabin from the fully tilted position into the tilted position; and
   d) engaging the sliding member with the lock so the retainer bar is in the operative position.

The third aspect of the disclosure may seek to provide a method to safely perform maintenance on the vehicle. A technical benefit may include increasing the safety of the user during the maintenance, and making the maintenance as easy as possible moving the retainer bar in the operative position, so the risk of the cabin untimely tilting in the upright position is decreased.

Optionally in some examples, including in at least one preferred example, the sliding interface further comprises a stand-by area, located at the locking end of the slit, the method further comprising at least:
e) tilting the cabin from the tilted position into the fully tilted position;
f) while the cabin is in the fully tilted position, moving the retainer bar in a standby position, and in the stand-by position, the sliding member is in contact with the stand-by area;
g) tilting the cabin from the fully tilted position to the upright position;
h) while the cabin is being tilted from the fully tilted position to the upright position, moving the retainer bar to insert the sliding member into the slit; and
i) sliding the sliding member along the slit.

A technical benefit may include moving the retainer bar from the operative position to the stand-by position and then to the inoperative position in a safe manner, as the retainer bar is moved from the operative position only when the cabin is in the fully tilted position, which prevents accidental movement of the retainer bar while the cabin is in the tilted position.

Optionally in some examples, including in at least one preferred example, the safety retainer further comprises a switch bracket, pivotably secured to the sliding interface and located between the stand-by area and the lock and when pivoting the retainer bar in the standby position, the sliding member slides on the switch bracket and the switch bracket is pivoted by the sliding member into a straight position wherein the sliding member is configured to slide on the switch bracket to move from the operative position to the stand-by position. A technical benefit may include facilitating movement of the retainer bar from the operative to the standby position

Optionally in some examples, including in at least one preferred example, the method further comprises at least:
j) when the retainer bar is in the stand-by position, pivoting by the switch bracket, in a blocking position, wherein the switch bracket is in contact with the sliding member and blocks the sliding member to prevent the retainer bar from moving from the stand-by position to the operative position.

A technical benefit may include facilitating movement of the retainer bar from the operative to the stand-by position by the straight position, and preventing the retainer bar from moving from the stand-by position to the operative position by the blocking position. This therefore increases the safety and the ease of use of the safety mechanism, as there is no risk of undesired movement of the retainer bar from the stand-by position in the operative position.

Optionally in some examples, including in at least one preferred example, the method further comprises further comprising at least:
k) while the cabin is being tilted from the fully tilted position to the upright position, escaping the switch bracket by the sliding member.

A technical benefit may include that the switch bracket stops blocking the sliding member only when the retainer bar can move from the stand-by position to the inoperative position, without risking moving back in the operative position.

Optionally in some examples, including in at least one preferred example, the retainer bar further comprises a handle, and moving the retainer bar in the stand-by position is performed by the user manipulating the handle. A technical benefit may include that only moving the retainer bar from the operative position to the stand-by position is performed manually, which limits the manual operations to an operation that if the user forgets to perform, the retainer bar will be in the operative position when the cabin tilts back in the tilted position, which does not cause a safety risk.

Optionally in some examples, including in at least one preferred example, the vehicle further comprises a cylinder and tilting the cabin from the upright position to the fully tilted position, tilting back the cabin from the fully tilted position into the tilted position, tilting the cabin from the tilted position into the fully tilted position and tilting the cabin from the fully tilted position to the upright position is done by the cylinder. A technical benefit may include moving the cabin in a convenient manner for the user.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** shows an exemplary vehicle according to an example.
**FIG. 2** shows the vehicle of **FIG.1** in a tilted position.
**FIG. 3** shows a detail of a safety retainer according to an example.
**FIG. 4** is a view similar to **FIG. 3****,** wherein a retainer bar of the safety retainer is in an operative position.
**FIG. 5** is a view similar to **FIG. 3****,** wherein the sliding member of the retainer bar is sliding on a switch bracket of the safety retainer.
**FIG. 6** is a view similar to **FIG. 3****,** wherein the retainer bar is in the stand-by position.
**FIG. 7** is a view similar to **FIG. 3****,** wherein a sliding member the retainer bar is escaping the switch bracket.
**FIG.8** is a schematic of a method for performing maintenance on a vehicle according to an example.

### DETAILED DESCRIPTION

The detailed description set forth below provides information and examples of the disclosed technology with sufficient detail to enable those skilled in the art to practice the disclosure.

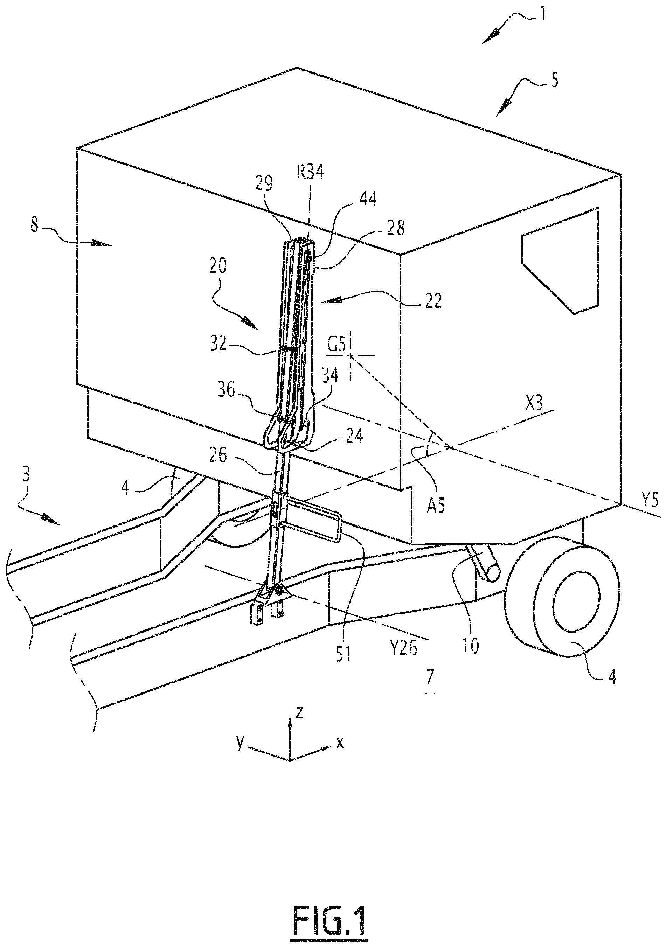

Figure 1 represents a vehicle 1 according to an example. The vehicle 1 is a heavy-duty vehicle, and is in particular a truck, and will also be referred to as truck 1.

The truck 1 comprises a chassis 3, wheels 4 and a cabin 5, schematically represented. The chassis 3 extends along a longitudinal axis X. A transversal axis Y and a height axis Z, perpendicular to the longitudinal axis X and to each other, are also defined. The wheels 4 are secured to the chassis 3, and are in contact with a ground 7. The wheels 4 are configured so that the truck 1 may travel on the ground 7.

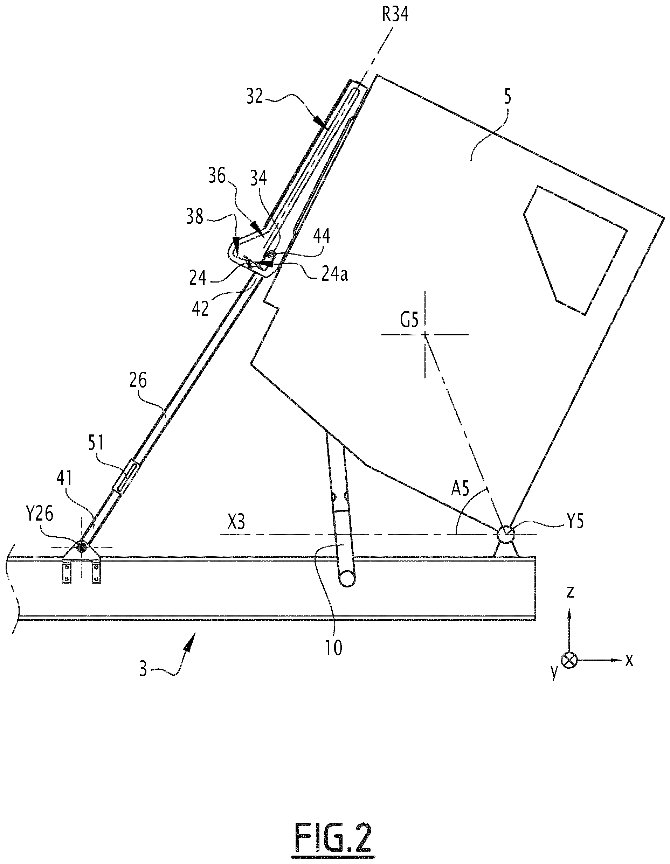

The cabin 5 is configured so that a user of the truck 1 may enter the cabin 5 to drive the truck 1. In some examples, the truck 1 is a fire-truck or a truck carrying heavy construction equipment, in which case the cabin 5 has a weight that is superior or equal to four tons. The cabin 5 has a gravity center G5, visible on figures 1 and 2 and a rear wall 8, extending transversally to the longitudinal axis X when the cabin is in the position represented on figure 1. The cabin 5 is pivotably secured to the chassis 3, and is configured to pivot, or tilt around a tilting axis Y5, which is parallel to the transversal axis Y. An axis X3, parallel to the longitudinal axis X, intersecting the tilting axis Y5 and coplanar to the gravity center G5 is further defined.

In some examples, the cabin 5 is configured to pivot between an upright, a tilted and a fully tilted position. In the upright position, a tilt angle A5 of the cabin is minimal. The tilt angle A5 is defined as the angle between the gravity center G5, the intersection between axes Y5 and X3 and the axis X3. When the cabin 5 is in the upright position, the tilt angle A5 is for example equal to 45 degrees. When the cabin 5 is in the tilted position, the tilt angle A5 is superior to the tilt angle A5 of the cabin 5 in the upright position, and is for example equal to 60°. When the cabin 5 is in the fully tilted position, the tilt angle A5 is superior to the tilt angle A5 of the cabin 5 in the tilted position, for example is strictly superior to 60°. In some examples, when the cabin 5 is in the fully tilted and tilted positions, the tilt angle A5 is strictly inferior to 90°. This means that, if the cabin 5 is not kept in the tilted or fully tilted position, the cabin 5 pivots back in the upright position under its own weight.

In some examples, when the cabin 5 is in the upright position, it covers elements of the truck 1, such as a motor of the truck 1, not represented, and when the cabin 5 is in the tilted or fully tilted positions, the motor of the truck 1 is accessible, for example for the user to perform maintenance on the motor, and more generally, on the truck 1.

The truck 1 further comprises a cylinder 10, connected to the chassis 3 and to the cabin 5. In some examples, the cylinder 10 is a hydraulic cylinder, and is configured to tilt the cabin 5 from the upright position to the tilted and fully titled positions and from the fully tilted position to the tilted position and the upright position. In some non-represented examples, the truck 1 comprises two cylinders 10, located on each side of the cabin 5 along the transversal axis Y.

The truck 1 further comprises a safety retainer 20, for the cabin 5. The safety retainer 20 is, in some examples, made of metal such as steel. The safety retainer 20 comprises a sliding interface 22, a switch bracket 24, and a retainer bar 26.

The sliding interface 22 is rigidly mounted on the cabin 5, in some examples, to the rear wall 8, so that the sliding interface 22 pivots with the cabin 5. The sliding interface 22 comprises a first locking part 28, and in some examples, a second locking part 29, identical to the first locking part 28 and parallel to the first locking part 28. The first locking part 28 comprises a slit 32 and a lock 34. The slit 34 extends along a slit axis R34. When the cabin 5 is in the upright position, the slit axis R34 is essentially parallel to the height axis Z, or at an angle inferior to 15° from the height axis Z. When the cabin 5 is in the tilted position, the slit axis is for example at an angle of 30° from the height axis Z. The slit 32 comprises a locking end 36. The lock 34 is located at the locking end 36, offset from the slit axis R34.

In some examples, the first locking part 28 further comprises a stand-by area 38, located at the locking end 36 and also offset from the slit axis R34.

The switch bracket 24 is located between the stand-by area 38 and the lock 34 and is pivotably secured to the first part 28. The switch bracket 24 comprises a flat surface 24a, and is configured to switch between a blocking position and a straight position.

In some examples, the safety retainer 20 further comprises a torsion spring 25, which biases the switch bracket 24 in the blocking position.

The second locking part 29 comprises a slit, a lock and a stand-by area, not visible in the figures. The slit, the lock and the stand-by area are identical to, parallel to, and aligned with respectively the slit 32, the lock 34 and the stand-by area 38.

In some examples, not represented, the switch bracket is secured to the second locking part, instead of being secured to the first locking part.

The retainer bar 26 comprises a first end 41 and a second end 42. The first end 41 is pivotably secured to the chassis 3, for example on one side of the chassis 3, and is configured to pivot around a retainer axis Y26, parallel to the transversal axis Y. The retainer bar 22 comprises a sliding member 44, fixedly secured to the second end 42. The sliding member 44 extends transversally from the retainer bar 26, and in the example represented on the figures, is cylindrical. The retainer bar 26 is configured to move between an inoperative position and operative position, and in some examples, a stand-by position.

In the inoperative position, visible in figure 1, the sliding member 44 is inserted in the slit 32, and in some examples, in the slit of the second part 29. In the inoperative position, the sliding member 44 is configured to slide along the slit 32.

In the operative position, visible in figure 2, the sliding member 44 is engaged with the lock 34, and in some examples, with the lock of the second part 29. This prevents a relative movement of the retainer bar 26 and the sliding interface 22.

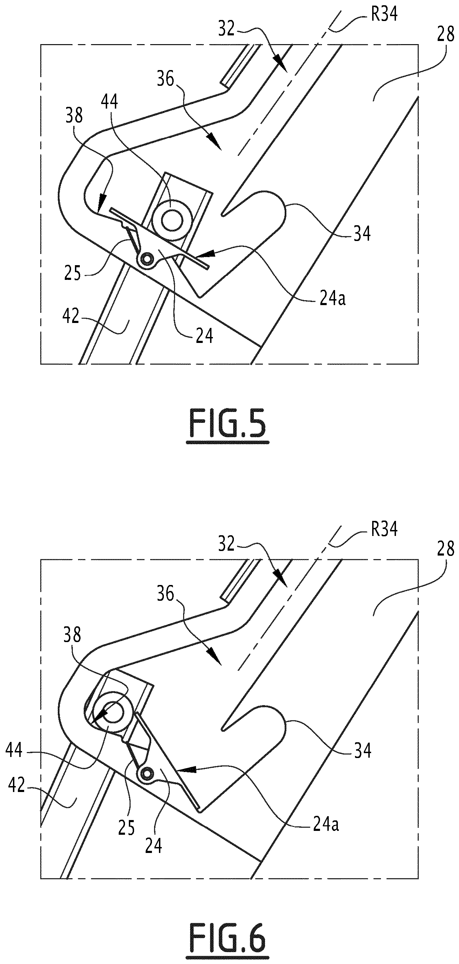

In the stand-by position, visible in figure 6, the sliding member 44 is in contact with the stand-by area. In some examples, when the retainer bar 26 is in the stand-by position, the switch bracket 24 is in the blocking position. In this case, the sliding member 44 is both in contact with the stand-by area 38 and the switch bracket 24, so that the switch bracket 24 blocks the sliding member 44 from sliding away from the stand-by area 38 and coming partially or fully engaged with the lock 34. This therefore prevents the retainer bar 26 from moving from the stand-by position to the operative position.

In some examples, the retainer bar 26 comprises a handle 51 that is configured to be used by the user to move the retainer bar 26 in the stand-by position. In some examples, the handle 51 is accessible by the user from outside the truck 1. In particular, the user may manipulate the handle 51 without being in further contact with the truck 1, such as standing on the truck 1. Especially, the user may manipulate the handle 51 while standing on the ground 7.

When the truck 1 is travelling on the ground 7, the cabin 5 is in the upright position and the retainer bar 26 is in the inoperative position. Due to vibrations, and irregularities on the ground, the retainer bar 26 may move relative to the sliding interface 20, causing the sliding member 44 to slide along the slit 32.

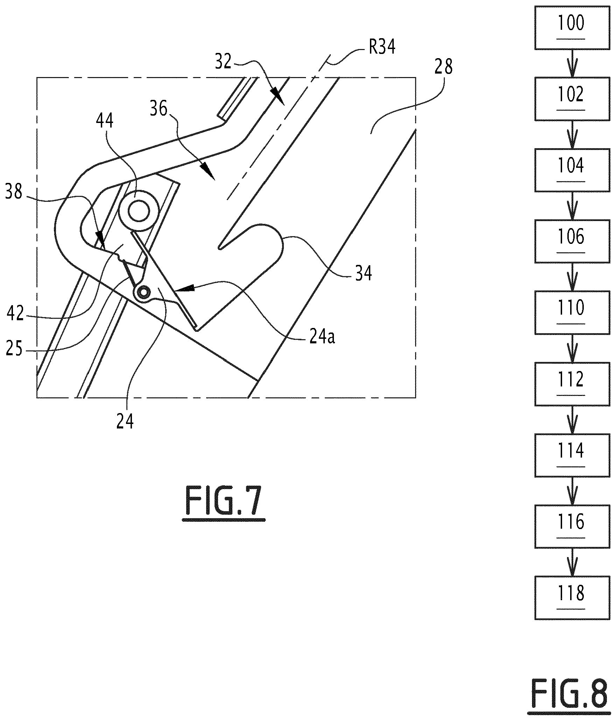

To perform maintenance, such as repairs, checks or inspections, on the truck 1, in particular on the motor, or on elements of the truck 1 covered by the cabin 5, it is necessary to tilt the cabin 5 away from the chassis 3 so that the motors and/or other elements on which maintenance is being performed are accessible by the user. A method for performing maintenance on the vehicle is now described, in reference to figure 8.

The retainer bar 26 is initially in the inoperative position and the cabin 5 in the upright position.

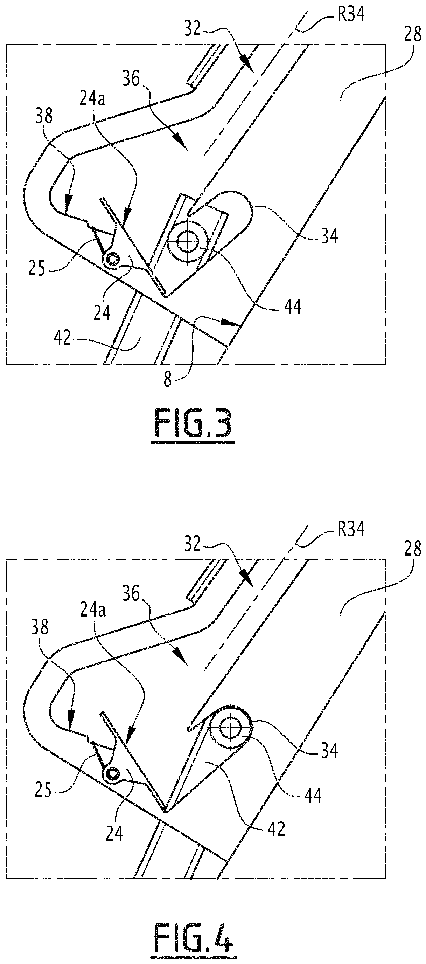

When the retainer bar 26 is in the inoperative position, the cylinder 10 tilts the cabin 5 from the upright position to the fully tilted position, for example by being pressurized, at step 100. The sliding interface 20 therefore moves along with the cabin 5. The retainer bar 26 pivots around the retainer axis Y26, the sliding member 44 slides along the slit 32 until it reaches the locking end 36 and comes partially engaged with the lock 34 at step 102, as shown on figure 3.

In order to fully engage the sliding member 44 with the lock 34, the cabin 5 is tilted back from the fully tilted position to the tilted position at step 104. This is done for example by depressurizing the cylinder 10, so that it does not hold the cabin 5 in the fully tilted position anymore. As a result, the cabin 5 tilts from the fully tilted position to the tilted position under its own weight, and step 106 consists in engaging the sliding member 44 within the lock 34 to prevent the cabin 5 from tilting back in the upright position. The cabin 5 is therefore locked in the tilted position and the retainer bar 26 is in the operative position, visible in figure 4.

The user can now perform maintenance on the truck 1. The retainer bar 26 improves a safety of the user by preventing untimely tilting back of the cabin 5 from the tilted position to the upright position, which could injure the user while he or she is performing maintenance, or cause damage to the truck 1.

In some examples, once the maintenance operations are done, the cabin 5 is tilted from the tilted position into the fully tilted position at step 110, for example by the cylinder 10, which is pressurized again. As a result, sliding member 44 is disengaged from the lock 34. While the cabin 5 is in the fully tilted position, the user moves the retainer bar 26 to the standby position in step 112. In some examples, the user moves the retainer bar 26 by manipulating the handle 51, for example by pulling the handle 51 to move the retainer bar 26, while the user stands on the ground 7.

In some examples, when the user moves the retainer bar 26 at step 112, the sliding member 44 slides on the flat surface 24a of switch bracket 24, as shown in figure 5. A weight of the sliding member 44 is sufficient to pivot the switch bracket 24 from the blocking position to the straight position, which allows the sliding member 44 to continue sliding along the flat surface 24a until it comes into contact with the stand-by area 38, so that the retainer bar 26 has moved from the operating position to the stand-by position.

When the sliding member 44 is in the stand-by position, the switch bracket 24 pivots in the blocking position at step 114. An end of the switch bracket 24 comes in contact with the sliding member 44 and blocks the sliding member 44 from sliding back on the flat surface 24a to become partially or fully engaged again with the lock 34, as visible in figure 6. Therefore, the switch bracket 24 blocks the retainer bar 26 from moving from the stand-by position to the operative position.

The cabin 5 is tilted from the fully tilted position to the upright position at step 116, for example by commanding a gradual depressurizing of the cylinder 10.

While the cabin 5 is tilted from the fully tilted position to the upright position, the sliding interface 22 pivots with the cabin 5, allowing the sliding member 44 to escape from the switch bracket 24 at step 118, visible on figure 7. The retainer bar 26 pivots under its own weight until the sliding member 44 reaches the locking end 36. As the cabin 5 continues to be tilted in the upright position, the sliding member 44 is inserted into the slit 32 and slides along the slit 32 at step 120, in particular, away from the locking end 36. The retainer bar 26 is therefore in the inoperative position, the cabin 5 in the upright position, and the truck 1 is configured for travelling on the ground 7.

The tilting of the cabin 5 in the upright, tilted and fully tilted positions are in some examples, controlled by the user, for example by pressing buttons on a control panel which controls the cylinder 10.

The safety retainer 20 enables to limit user manipulation of the retainer bar 26, as the user only needs to move the retainer bar 26 into the stand-by position at step 112. The other steps are performed without requiring the user to manually move the retainer bar 26. Furthermore, there is no risk of the user forgetting to move the retainer bar 26 in the operative position, as the retainer bar 26 moves from the inoperative position to the operative position without being manipulated by the user. There is also no risk of the retainer bar 26 accidentally moving from the operative position to the stand-by or inoperative positions while the cabin 5 is in the tilted position. Indeed, the retainer bar 26 is in the stand-by position only when the cabin 5 is in the fully tilted position. In order for the retainer bar 26 to move from the operative position into the stand-by or inoperative positions, the cabin 5 has to go from being tilted to being fully tilted. Thus, the safety retainer 20 makes maintenance operations easier and safer for the user.

In some examples, not represented, the safety retainer comprises two switch brackets, the first switch bracket located on the first part of the safety retainer and the second switch bracket located on the second part of the safety retainer.

In some examples, not represented, the slit comprises a plastic lining so that the sliding member is in contact with the plastic lining when moving along the slit. This may reduce noise caused by a contact between the slit and the sliding member.

**Example 1:** A safety retainer 20, for a cabin 5 of a vehicle 1, the safety retainer 20 comprising:
- a sliding interface 22, configured to be rigidly mounted on the cabin 5 of the vehicle 1, the sliding interface 22 comprising a slit 32 and a lock 34, located at a locking end 36 of the slit 32,
- a retainer bar 26, comprising a first end 41 configured to be pivotably secured to a chassis 3 of the vehicle 1 and a second end 42 comprising a sliding member 44; and
the retainer bar 26 being configured to move between:
- an inoperative position, wherein the sliding member 44 is inserted in the slit 32 and configured to slide along the slit 32; and
- an operative position, wherein the sliding member 44 is engaged with the lock 34 to prevent a relative movement of the retainer bar 26 and the sliding interface 22.

**Example 2:** The safety retainer 20 of example 1, the sliding interface 22 further comprising a stand-by area 38, located at the locking end 36 of the slit 32.

**Example 3:** The safety retainer 20 of example 2, the retainer bar 26 being further configured to move in a stand-by position and when the retainer bar 26 is in the stand-by position, the sliding member 44 is in contact with the stand-by area 38.

**Example 4:** The safety retainer 20 of example 3, further comprising a switch bracket 24, pivotably secured to the sliding interface 22 and located between the stand-by area 38 and the lock 34.

**Example 5:** The safety retainer 20 of example 4, wherein the switch bracket 24 is pivotable between:
- a straight position wherein the sliding member 44 is configured to slide on the switch bracket 24 for the retainer bar 26 to move from the operative position to the stand-by position; and
- a blocking position, wherein the switch bracket 24 is in contact with the sliding member 44 and blocks the sliding member 44 to prevent the retainer bar 26 from moving from the stand-by position to the operative position.

**Example 6:** The safety retainer 20 of example 5, further comprising a torsion spring 25 biasing the switch bracket 24 in the blocking position.

**Example 7:** The safety retainer 20 of any of examples 1 to 6, the retainer bar 26 further comprising a handle 51.

**Example 8:** A vehicle 1 comprising:
- a chassis 3;
- a cabin 5, secured to the chassis 3, the cabin 5 comprising a rear wall 8;
- the safety retainer 20 of any of claims 1 to 7, the retainer bar 26 being pivotably secured to the chassis 3 and the sliding interface 22 being fixedly mounted on the rear wall 8.

**Example 10:** The vehicle 1 of example 8, wherein the cabin 5 is configured to pivot in an upright position, and when the cabin 5 is in the upright position, the retainer bar 26 is in the inoperative position.

**Example 11:** The vehicle 1 of example 10, wherein the cylinder 10 is further configured to pivot the cabin 5 in a fully tilted position in which a tilt angle A5 of the cabin 5 in the fully tilted position is superior to the tilt angle A5 of the cabin 5 in the tilted position and when the retainer bar 26 is in the standby position, the cabin 5 is in the fully tilted position.

**Example 12:** The vehicle 1 of example 11, wherein the tilt angle A5 of the cabin in the fully tilted position is inferior to 90°.

**Example 13:** The vehicle 1 of any of examples 8 to 12, wherein the cabin 5 is according to claim 7 and the handle 51 is configured to be accessible by a user from outside the vehicle 1.

**Example 14:** A method for performing maintenance on a vehicle 1, the vehicle 1 comprising:
- a chassis 3;
- a cabin 5, secured to the chassis 3, the cabin 5 comprising a rear wall 8;
- a safety retainer 20, the safety retainer 20 comprising:
   ∘ a retainer bar 26, comprising a first end 41 pivotably secured to the chassis 3 and a second end 42 comprising a sliding member 44; and
   ∘ a sliding interface 22, rigidly mounted on the rear wall 8 of the vehicle 1, the sliding interface 22 comprising a slit 32 and a lock 34, located at a locking end 36 of the slit 32,

the retainer bar 26 being configured to move between:
   - an inoperative position, wherein the sliding member 44 is inserted in the slit 32 and configured to move along the slit 32; and
   - an operative position, wherein the sliding member 44 is engaged with the lock 34 to prevent a relative movement of the retainer bar 26 and the sliding interface 22.
the method comprising at least:
   a) when the retainer bar 26 is in the inoperative position, tilting 100 the cabin 5 from an upright position into a fully tilted position;
   b) while the cabin 5 is being tilted, sliding 102 the sliding member 44 along the slit 32 until it is partially engaged with the lock 34;
   c) tilting back 104 the cabin 5 from the fully tilted position into the tilted position; and
   d) engaging 106 the sliding member 44 with the lock 34 so the retainer bar 26 is in the operative position.

**Example 15:** The method of example 14, wherein the sliding interface 22 further comprises a stand-by area 38, located at the locking end 36 of the slit 32, the method further comprising at least:
e) tilting 110 the cabin 5 from the tilted position into the fully tilted position;
f) while the cabin 5 is in the fully tilted position, moving 112 the retainer bar 26 in a stand-by position, wherein, in the stand-by position, the sliding member 44 is in contact with the stand-by area 38;
g) tilting 116 the cabin 5 from the fully tilted position to the upright position;
h) while the cabin 5 is being tilted from the fully tilted position to the upright position, moving the retainer bar 26 to insert the sliding member 44 into the slit 32; and
i) sliding 120 the sliding member 44 along the slit 32.

**Example 16:** The method according to example 15, wherein the safety retainer 20 further comprises a switch bracket 24, pivotably secured to the sliding interface 22 and located between the stand-by area 38 and the lock 34 and when pivoting the retainer bar 26 in the standby position, the sliding member 44 slides on the switch bracket 24 and the switch bracket 24 is pivoted by the sliding member 44 into a straight position wherein the sliding member 44 is configured to slide on the switch bracket 24 to move from the operative position to the standby position.

**Example 17:** The method according to example 16, wherein the method further comprises at least:
j) when the retainer bar 26 is in the stand-by position, pivoting 114 by the switch bracket 25, in a blocking position, wherein the switch bracket 24 is in contact with the sliding member 44 and blocks the sliding member 44 to prevent the retainer bar 26 from moving from the stand-by position to the operative position.

**Example 18:** The method according to example 17, further comprising at least:
k) while the cabin 5 is being tilted from the fully tilted position to the upright position, escaping 118 the switch bracket 24 by the sliding member 44.

**Example 19:** The method according to any of examples 15 to 18, wherein the retainer bar 26 further comprises a handle 51, and moving the retainer bar 26 in the stand-by position is performed by the user manipulating the handle 51.

**Example 20:** The method of any of examples 15 to 18, wherein the vehicle 1 further comprises a cylinder 10 and tilting 100 the cabin 5 from the upright position to the fully tilted position, tilting back 104 the cabin 5 from the fully tilted position into the tilted position, tilting 110 the cabin 5 from the tilted position into the fully tilted position and tilting 116 the cabin 5 from the fully tilted position to the upright position is done by the cylinder 10.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A safety retainer (20), for a cabin (5) of a vehicle (1), the safety retainer (20) comprising:
- a sliding interface (22), configured to be rigidly mounted on the cabin (5) of the vehicle (1), the sliding interface (22) comprising a slit (32) and a lock (34), located at a locking end (36) of the slit (32),
- a retainer bar (26), comprising a first end (41) configured to be pivotably secured to a chassis (3) of the vehicle (1) and a second end (42) comprising a sliding member (44); and
the retainer bar (26) being configured to move between:
- an inoperative position, wherein the sliding member (44) is inserted in the slit (32) and configured to slide along the slit (32); and
- an operative position, wherein the sliding member (44) is engaged with the lock (34) to prevent a relative movement of the retainer bar (26) and the sliding interface (22).

2. The safety retainer (20) of claim 1, wherein the sliding interface (22) further comprises a stand-by area (38), located at the locking end (36) of the slit (32).

3. The safety retainer (20) of claim 2, wherein the retainer bar (26) is further configured to move in a stand-by position and wherein, in the stand-by position, the sliding member (44) is in contact with the stand-by area (38).

4. The safety retainer (20) of claim 3, further comprising a switch bracket (24), pivotably secured to the sliding interface (22) and located between the stand-by area (38) and the lock (34).

5. The safety retainer (20) of claim 4, wherein the switch bracket (24) is pivotable between:
- a straight position wherein the sliding member (44) is configured to slide on the switch bracket (24) for the retainer bar (26) to move from the operative position to the stand-by position; and
- a blocking position, wherein the switch bracket (24) is in contact with the sliding member (44) and blocks the sliding member (44) to prevent the retainer bar (26) from moving from the stand-by position to the operative position.

6. The safety retainer (20) of claim 5, further comprising a torsion spring (25) biasing the switch bracket (24) in the blocking position.

7. The safety retainer (20) of any of claims 1 to 6, wherein the retainer bar (26) further comprises a handle (51).

8. A vehicle (1) comprising:
- a chassis (3);
- a cabin (5), secured to the chassis (3), the cabin (5) comprising a rear wall (8);
- the safety retainer (20) of any of claims 1 to 7, wherein the retainer bar (26) is pivotably secured to the chassis (3) and the sliding interface (22) is fixedly mounted on the rear wall (8).

9. The vehicle (1) of claim 8, wherein the cabin (5) is configured to pivot in an upright position, and wherein, when the cabin (5) is in the upright position, the retainer bar (26) is in the inoperative position.

10. The vehicle (1) of claim 9, further comprising a cylinder (10) configured to pivot the cabin (5) from the upright position into a tilted position and wherein, when the cabin (5) is in the tilted position, the retainer bar (26) is in the operative position to lock the cabin (5) in the tilted position.

11. A method for performing maintenance on a vehicle (1), the vehicle (1) comprising:
- a chassis (3);
- a cabin (5), secured to the chassis (3), the cabin (5) comprising a rear wall (8);
- a safety retainer (20), the safety retainer (20) comprising:
∘ a retainer bar (26), comprising a first end (41) pivotably secured to the chassis (3) and a second end (42) comprising a sliding member (44); and
∘ a sliding interface (22), rigidly mounted on the rear wall (8) of the vehicle (1), the sliding interface (22) comprising a slit (32) and a lock (34), located at a locking end (36) of the slit (32),
the retainer bar (26) being configured to move between:
- an inoperative position, wherein the sliding member (44) is inserted in the slit (32) and configured to move along the slit (32); and
- an operative position, wherein the sliding member (44) is engaged with the lock (34) to prevent a relative movement of the retainer bar (26) and the sliding interface (22).
the method comprising at least:
a) when the retainer bar (26) is in the inoperative position, tilting (100) the cabin (5) from an upright position into a fully tilted position;
b) while the cabin (5) is being tilted, sliding (102) the sliding member (44) along the slit (32) until it is partially engaged with the lock (34);
c) tilting back (104) the cabin (5) from the fully tilted position into the tilted position; and
d) engaging (106) the sliding member (44) with the lock (34) so the retainer bar (26) is in the operative position.

12. The method of claim 11, wherein the sliding interface (22) further comprises a stand-by area (38), located at the locking end (36) of the slit (32), the method further comprising at least:
e) tilting (110) the cabin (5) from the tilted position into the fully tilted position;
f) while the cabin (5) is in the fully tilted position, moving (112) the retainer bar (26) in a stand-by position, wherein, in the stand-by position, the sliding member (44) is in contact with the stand-by area (38);
g) tilting (116) the cabin (5) from the fully tilted position to the upright position;
h) while the cabin (5) is being tilted from the fully tilted position to the upright position, moving the retainer bar (26) to insert the sliding member (44) into the slit (32); and
i) sliding (120) the sliding member (44) along the slit (32).

13. The method according to claim 12, wherein the safety retainer (20) further comprises a switch bracket (24), pivotably secured to the sliding interface (22) and located between the stand-by area (38) and the lock (34) and wherein, when pivoting the retainer bar (26) in the stand-by position, the sliding member (44) slides on the switch bracket (24) and the switch bracket (24) is pivoted by the sliding member (44) into a straight position wherein the sliding member (44) is configured to slide on the switch bracket (24) to move from the operative position to the stand-by position.

14. The method according to claim 13, wherein the method further comprises at least:
j) when the retainer bar (26) is in the stand-by position, pivoting (114) by the switch bracket (25), in a blocking position, wherein the switch bracket (24) is in contact with the sliding member (44) and blocks the sliding member (44) to prevent the retainer bar (26) from moving from the stand-by position to the operative position.

15. The method according to claim 14, further comprising at least:
k) while the cabin (5) is being tilted from the fully tilted position to the upright position, escaping (118) the switch bracket (24) by the sliding member (44).

## Amended claims

### Amended claims in accordance with Rule 137(2) EPC.

1. A safety retainer (20), for a cabin (5) of a vehicle (1), the safety retainer (20) comprising:
- a sliding interface (22), configured to be rigidly mounted on the cabin (5) of the vehicle (1), the sliding interface (22) comprising a slit (32) and a lock (34), located at a locking end (36) of the slit (32),
- a retainer bar (26), comprising a first end (41) configured to be pivotably secured to a chassis (3) of the vehicle (1) and a second end (42) comprising a sliding member (44); and
the retainer bar (26) being configured to move between:
- an inoperative position, wherein the sliding member (44) is inserted in the slit (32) and configured to slide along the slit (32); and
- an operative position, wherein the sliding member (44) is engaged with the lock (34) to prevent a relative movement of the retainer bar (26) and the sliding interface (22),
wherein the sliding interface (22) further comprises a stand-by area (38), located at the locking end (36) of the slit (32), the retainer bar (26) is further configured to move in a stand-by position and wherein, in the stand-by position, the sliding member (44) is in contact with the stand-by area (38),
**characterized in that** the safety retainer further comprises a switch bracket (24), pivotably secured to the sliding interface (22) and located between the stand-by area (38) and the lock (34).

2. The safety retainer (20) of claim 1, wherein the switch bracket (24) is pivotable between:
- a straight position wherein the sliding member (44) is configured to slide on the switch bracket (24) for the retainer bar (26) to move from the operative position to the stand-by position; and
- a blocking position, wherein the switch bracket (24) is in contact with the sliding member (44) and blocks the sliding member (44) to prevent the retainer bar (26) from moving from the stand-by position to the operative position.

3. The safety retainer (20) of claim 2, further comprising a torsion spring (25) biasing the switch bracket (24) in the blocking position.

4. The safety retainer (20) of any of claims 1 to 3, wherein the retainer bar (26) further comprises a handle (51).

5. A vehicle (1) comprising:
- a chassis (3);
- a cabin (5), secured to the chassis (3), the cabin (5) comprising a rear wall (8);
- the safety retainer (20) of any of claims 1 to 4, wherein the retainer bar (26) is pivotably secured to the chassis (3) and the sliding interface (22) is fixedly mounted on the rear wall (8).

6. The vehicle (1) of claim 5, wherein the cabin (5) is configured to pivot in an upright position, and wherein, when the cabin (5) is in the upright position, the retainer bar (26) is in the inoperative position.

7. The vehicle (1) of claim 6, further comprising a cylinder (10) configured to pivot the cabin (5) from the upright position into a tilted position and wherein, when the cabin (5) is in the tilted position, the retainer bar (26) is in the operative position to lock the cabin (5) in the tilted position.

8. A method for performing maintenance on a vehicle (1), the vehicle (1) comprising:
- a chassis (3);
- a cabin (5), secured to the chassis (3), the cabin (5) comprising a rear wall (8);
- a safety retainer (20), the safety retainer (20) comprising:
o a retainer bar (26), comprising a first end (41) pivotably secured to the chassis (3) and a second end (42) comprising a sliding member (44); and
o a sliding interface (22), rigidly mounted on the rear wall (8) of the vehicle (1), the sliding interface (22) comprising a slit (32) and a lock (34), located at a locking end (36) of the slit (32),
the retainer bar (26) being configured to move between:
- an inoperative position, wherein the sliding member (44) is inserted in the slit (32) and configured to move along the slit (32); and
- an operative position, wherein the sliding member (44) is engaged with the lock (34) to prevent a relative movement of the retainer bar (26) and the sliding interface (22),
the method comprising at least:
a) when the retainer bar (26) is in the inoperative position, tilting (100) the cabin (5) from an upright position into a fully tilted position;
b) while the cabin (5) is being tilted, sliding (102) the sliding member (44) along the slit (32) until it is partially engaged with the lock (34);
c) tilting back (104) the cabin (5) from the fully tilted position into the tilted position; and
d) engaging (106) the sliding member (44) with the lock (34) so the retainer bar (26) is in the operative position,
wherein the sliding interface (22) further comprises a stand-by area (38), located at the locking end (36) of the slit (32), the retainer bar (26) is further configured to move in a stand-by position and wherein, in the stand-by position, the sliding member (44) is in contact with the stand-by area (38),
**characterized in that** the safety retainer further comprises a switch bracket (24), pivotably secured to the sliding interface (22) and located between the stand-by area (38) and the lock (34).

9. The method of claim 8, wherein the method further comprises at least:
e) tilting (110) the cabin (5) from the tilted position into the fully tilted position;
f) while the cabin (5) is in the fully tilted position, moving (112) the retainer bar (26) in a stand-by position, wherein, in the stand-by position, the sliding member (44) is in contact with the stand-by area (38);
g) tilting (116) the cabin (5) from the fully tilted position to the upright position;
h) while the cabin (5) is being tilted from the fully tilted position to the upright position, moving the retainer bar (26) to insert the sliding member (44) into the slit (32); and
i) sliding (120) the sliding member (44) along the slit (32).

10. The method according to claim 9, wherein, when pivoting the retainer bar (26) in the stand-by position, the sliding member (44) slides on the switch bracket (24) and the switch bracket (24) is pivoted by the sliding member (44) into a straight position wherein the sliding member (44) is configured to slide on the switch bracket (24) to move from the operative position to the stand-by position.

11. The method according to claim 10, wherein the method further comprises at least:
j) when the retainer bar (26) is in the stand-by position, pivoting (114) by the switch bracket (25), in a blocking position, wherein the switch bracket (24) is in contact with the sliding member (44) and blocks the sliding member (44) to prevent the retainer bar (26) from moving from the stand-by position to the operative position.

12. The method according to claim 11, further comprising at least:
k) while the cabin (5) is being tilted from the fully tilted position to the upright position, escaping (118) the switch bracket (24) by the sliding member (44).
